(19) Europäisches Patentamt
European Patent Office
Office européen des brevets

(11) Veröffentlichungsnummer: **0 539 682 B1**

(12) **EUROPÄISCHE PATENTSCHRIFT**

(45) Veröffentlichungstag der Patentschrift: **07.12.94**

(51) Int. Cl.5: **B27K 3/50**

(21) Anmeldenummer: **92114295.6**

(22) Anmeldetag: **21.08.92**

# (54) Mittel zum Konservieren von Holz und Holzwerkstoffen, Verfahren zu dessen Herstellung und Verwendung desselben.

(30) Priorität: **28.10.91 DE 4135505**

(43) Veröffentlichungstag der Anmeldung:
**05.05.93 Patentblatt 93/18**

(45) Bekanntmachung des Hinweises auf die Patenterteilung:
**07.12.94 Patentblatt 94/49**

(84) Benannte Vertragsstaaten:
**AT BE CH DE DK ES FR GB GR IE IT LI LU MC NL PT SE**

(56) Entgegenhaltungen:
**EP-A- 0 242 772**
**EP-A- 0 246 477**
**FR-A- 2 510 464**

**CHEMICAL ABSTRACTS, vol. 104, no. 17, 1985, Columbus, Ohio, US; abstract no. 143795q; "Stability and performance of some modern fungicides used for woodpreservation"**

**CHEMICAL ABSTRACTS, vol. 102, no. 9, 1984, Columbus, Ohio, US; abstract no. 74219z; "Coating composition for preservation of wood"; & JP-A-59 115 805**

(73) Patentinhaber: **DESOWAG Materialschutz GmbH**
**Postfach 32 02 20,**
**Rossstrasse 76**
**D-40417 Düsseldorf (DE)**

(72) Erfinder: **Goletz, Peter**
**Hahnendyk 18b**
**W-4152 Kempen, Sankt Hubert (DE)**
Erfinder: **Naczinski, Luzian**
**Nierster Strasse 18**
**W-4005 Meerbusch 3 (DE)**

(74) Vertreter: **Lauer, Dieter, Dr.**
**c/o Solvay Deutschland GmbH**
**Hans-Böckler-Allee 20**
**D-30173 Hannover (DE)**

**EP 0 539 682 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Mittel zum Konservieren von Holz und Holzwerkstoffen enthaltend mindestens ein wasserunlösliches, in einem flüssigen aliphatischen und/oder aromatischen Kohlenwasserstofflösemittel lösliches organisch-chemisches Biozid und bestimmte Gewichtsmengen eines flüssigen Lösemittelgemisches aus aliphatischen und aromatischen Kohlenwasserstoffen sowie gegebenenfalls Farbstoffe und/oder Pigmente, ein Kunstharz oder ein Kunstharzgemisch, Fixierungs-, Stabilisierungs-, Verdünnungsmittel und/oder Zusatz- oder Verarbeitungshilfsmittel, wobei das Holzkonservierungsmittel zusätzlich ein Stabilisierungsmittel auf der Basis mindestens eines Aryl- oder Aralkyl- bzw. Alkyl-Aryl-Gruppen tragenden Phenoles, eines Bisphenoles oder Bisphenol-derivates und/oder Polyoxypolyphenylalkans und/oder mindestens eines Phosphatides enthält. Die Erfindung betrifft weiterhin ein Verfahren zur Herstellung des Holzkonservierungsmittels und die Verwendung desselben.

Es ist bereits bekannt, daß bestimmte substituierte Phenole, vorzugsweise Chlorphenole wie Pentachlorphenol, als Biozid in Holzkonservierungsmitteln eingesetzt werden können (vergleiche u.a. DE-A 20 08 509). Diese Holzkonservierungsmittel gelten jedoch in den meisten Ländern aus Gründen des Umweltschutzes als nicht verwendbar und diese substituierten Phenole, Chlorphenole, insbesondere Pentachlorphenol stellen dabei selbst das Fungizid dar.

Es ist weiterhin aus der DE-A 39 19 906 bekannt, den Rückstand aus der Phenolsynthese, bei dem der Acetophenon-Anteil entfernt ist, in hochsiedenden aromatischen Lösemitteln als Wirkstoff für Holzschutzmittel einzusetzen. Die Verwendung dieser Rückstände aus der Phenolsynthese hat den Nachteil, daß diese Gemische unterschiedliche Stoffe enthalten. Diese Gemische können auch Stoffe enthalten, die negative Einwirkungen auf die Umwelt haben können. Diese Rückstände können weiterhin nicht als Stabilisierungsmittel verwendet werden.

In den Holzkonservierungsmitteln werden als Lösemittel für die Biozide überwiegend aromatische organisch-chemische Kohlenwasserstoffe eingesetzt. Es ist weiterhin bekannt, Gemische von aromatischen und aliphatischen Kohlenwasserstoffen, meist mit einem überwiegenden Anteil von aromatischen Kohlenwasserstoffen, einzusetzen. Die aromatischen Kohlenwasserstoffe haben den Vorteil einer ausgezeichneten Löslichkeit für Biozide, jedoch den Nachteil, daß häufig geruchliche Beeinträchtigungen bei der Anwendung des Holzschutzmittels nicht auszuschließen sind. Ist der Anteil von aliphatischen Kohlenwasserstoffen gegenüber den aromatischen Kohlenwasserstoffen erhöht, so ist festzustellen, daß die verwendeten Holzkonservierungsmittel bei der Lagerung instabil werden und die darin eingesetzten Biozide bei Temperaturschwankungen zu Ausfällungen oder anderen Konzentrationsverschiebungen neigen und daher eine verminderte Wirkung bzw. eine verminderte biologische Aktivität aufweisen.

Ziel und Aufgabe der vorliegenden Erfindung war es daher, ein Holzkonservierungsmittel zu finden, das als Lösemittelgemisch mindestens einen aliphatischen Kohlenwasserstoff und mindestens einen aromatischen Kohlenwasserstoff enthält, daß das Konservierungsmittel bei der Lagerung selbst bei gewissen Temperaturschwankungen stabilisiert ist. Das Mittel sollte nach Möglichkeit eine gewissen chemische Stabilisierung (Verhinderung des chemischen Abbaues des oder der Wirkstoffe) und/oder eine physikalische Stabilisierung (Verhinderung der unerwünschten Auskristallisation, Abscheidung und dergleichen) erreichen.

Erfindungsgemäß wurde festgestellt, daß diesen Zielen und Aufgaben ein Mittel zum Konservieren von Holz und Holzwerkstoffen enthaltend mindestens ein wasserunlösliches, in einem flüssigen aliphatischen und/oder aromatischen Kohlenwasserstofflösemittel lösliches Biozid und ein flüssiges Lösemittelgemisch aus aliphatischen und aromatischen Kohlenwasserstoffen sowie gegebenenfalls Farbstoffe und/oder Pigmente, ein Kunstharz oder ein Kunstharzgemisch, Fixierungs-, Stabilisierungs-, Verdünnungsmittel und/oder Zusatz- oder Verarbeitungshilfsmittel gerecht wird. Gemäß der Erfindung besteht das mindestens einen aliphatischen Kohlenwasserstoff und mindestens einen aromatischen Kohlenwasserstoff enthaltende wasserunlösliche Lösemittelgemisch (bezogen auf 100 Gewichtsteile des Gemisches aus aliphatischen und aromatischen Kohlenwasserstoffen) aus 5 bis 20 Gew.-%, vorzugsweise 6 bis 17 Gew.-%, mindestens eines aromatischen Kohlenwasserstofflösemittels und 95 bis 80 Gew.-%, vorzugsweise 94 bis 83 Gew.-%, mindestens eines aliphatischen Lösemittels, vorzugsweise eines aliphatischen Kohlenwasserstoffes, und das Holzkonservierungsmittel enthält zusätzlich ein Stabilisierungsmittel auf der Basis mindestens eines Aryl- oder Aralkyl- bzw. Alkyl-Aryl-Gruppen tragenden Phenoles, eines Bisphenoles oder Bisphenolderivates und/oder Polyoxypolyphenylalkans und/oder mindestens eines Phosphatides.

Das Stabilisierungsmittel gemäß der Erfindung enthält mindestens ein Bis-hydroxyarylalkan oder Bis-hydroxyarylalkanderivat, vorzugsweise Bis-hydroxyphenyl-alkan mit $C_1$ bis $C_5$, oder besteht daraus.

Gemäß der Erfindung sind je 100 Gewichtsteile Kohlenwasserstofflösemittelgemisch 0,005 bis 15 Gew.-%, vorzugsweise 0,01 bis 2 Gew.-%, des Stabilisierungsmittels oder Stabilisierungsmittelgemisches im Holzkonservierungsmittel enthalten. Mit Hilfe des Stabilisierungsmittels gelingt es, die Wirkstoffe chemisch

und/oder physikalisch stabil in dem Holzkonservierungsmittel zu halten, selbst wenn der Anteil an aliphatischen Kohlenwasserstoffen sehr hoch ist.

Nach einer bevorzugten Ausführungsform enthält das Holzkonservierungsmittel je 100 Gewichtsteile Kohlenwasserstofflösemittelgemische zusätzlich 0,005 bis 25 Gewichtsteile, vorzugsweise 0,05 bis 5 Gewichtsteile, mindestens eines polaren, organisch-chemischen wasserlöslichen Lösemittels oder Lösemittelgemisches, vorzugsweise eines aliphatischen Alkohols, Esters und/oder Ethers. Dabei werden bevorzugt Butyldiglykol, Methoxypropylacetat und/oder Trimethylpentadiolmonoisobutyrat verwendet.

Nach einer bevorzugten Ausführungsform enthält das Stabilisierungsmittel Bis-(4-hydroxyphenyl)-methan, Bis-(4-hydroxyphenyl)-propan, Bis-(3-methyl-4-hydroxyphenyl)-propan, Bis-(4-hydroxy-3,5-di-tert-butylphenyl)-methan, vorzugsweise 2,2-Bis-(4-hydroxyphenyl)propan, oder besteht daraus.

Nach einer weiteren bevorzugten Ausführungsform enthält das Stabilisierungsmittel zusätzlich mindestens ein Hydroxytoluol, Alkyl- oder Polyalkyl-hydroxytoluol, vorzugsweise Di-alkyl-hydroxytoluol, und/oder mindestens ein Phosphatid.

Bevorzugt besteht das Phosphatid aus Soja-Lecithin oder enthält dieses oder ist auf der Basis von Soja-Lecithin.

Nach einer anderen bevorzugten Ausführungsform besitzt das im Stabilisierungsmittel mitvervendete Dialkylhydroxytoluol ein $C_1$- bis $C_5$-Alkyl, besteht jedoch vorzugsweise aus 3,5-Di-tert-butyl-4-hydroxytoluol.

Nach einer bevorzugten Ausführungsform beträgt das Gewichtsverhältnis des Phenolderivates oder Bisphenoles oder Bisphenolderivates und/oder Polyoxypolyphenylalkans zu dem Phosphatid

5 : 1 bis 1 : 50, vorzugsweise
1 : 1 bis 1 : 10.
Besonders bevorzugt ist das Gewichtsverhältnis
1 : 1,1 bis 1 : 8,

so daß das Phosphatid gewichtsmäßig vorzugsweise im Überschuß verwendet wird.

Das Holzkonservierungsmittel enthält nach einer anderen bevorzugten Ausführungsform
0,1 bis 35 Gew.-%, vorzugsweise
2 bis 25 Gew.-%,

mindestens eines Kunstharzes, vorzugsweise eines Alkydharzes (berechnet als Feststoff), und/oder Fixierungsmittels (berechnet ohne Verdünnungs- oder Lösemittel).

Nach einer Ausführungsform enthält das Holzkonservierungsmittel
0,001 bis 30 Gew.-%

mindestens eines in einem organisch-chemischen Lösemittelgemisch löslichen Biozides,
mehr als 50 Gew.-%, vorzugsweise
mehr als 60 Gew.-%,

eines Lösemittelgemisches, das aus mindestens einem aliphatischen und mindestens einem aromatischen Kohlenwasserstoff-Lösemittel und dem Stabilisierungsmittel oder Stabilisierungsmittelgemisch besteht oder dieses enthält

und je 100 Gewichtsteile des Kohlenwasserstoff-Lösemittelgemisches
0,005 bis 15 Gewichtsteile, vorzugsweise
0,01 bis 3 Gewichtsteile,

des Stabilisierungsmittels oder Stabilisierungsmittelgemisches sowie
0,005 bis 25 Gewichtsteile, vorzugsweise
0,05 bis 5 Gewichtsteile,

mindestens eines polaren Lösungsmittels sowie mindestens ein organisch-chemisches Bindemittel oder Fixierungsmittel, vorzugsweise Alkydharz, sowie gegebenenfalls mindestens ein Verarbeitungshilfsmittel, Tensid, Pigment und/oder Farbstoff.

Das anwendungsfertige Holzkonservierungsmittel enthält nach der bevorzugten Ausführungsform
0,001 bis 8 Gew.-%, vorzugsweise
0,01 bis 4 Gew.-%,

mindestens eines organisch-chemischen Biozides,
0,1 bis 30 Gew.-%, vorzugsweise
5 bis 25 Gew.-% (berechnet als Feststoff),

mindestens eines Binde- und/oder Fixierungsmittels, vorzugsweise Alkydharz,
0 bis 5 Gew.-%, vorzugsweise
0,01 bis 3 Gew.-%,

mindestens eines Farbstoffes, Pigmentes und/oder Verarbeitungshilfsmittels oder Zusatzmittels sowie
91,899 Gew.-% bis 58 Gew.-%, vorzugsweise
94,89 Gew.-% bis 68 Gew.-%,

eines Gemisches aus mindestens einen aliphatischen und mindestens einen aromatischen Kohlenwasserstoff enthaltendem Lösemittelgemisch mit einem Stabilisierungsmittel oder Stabilisierungsmittelgemisch sowie gegebenenfalls mindestens ein polares organisch-chemisches Lösemittel oder besteht daraus.

Die Erfindung betrifft weiterhin ein Verfahren zur Herstellung eines Mittels zum Konservieren von Holz und Holzwerkstoffen enthaltend mindestens ein wasserunlösliches, in einem flüssigen aliphatischen und/oder aromatischen Kohlenwasserstofflösemittel lösliches organischchemisches Biozid und ein flüssiges Lösemittelgemisch aus aliphatischen und aromatischen Kohlenwasserstoffen sowie gegebenenfalls Farbstoffe und/oder Pigmente, ein Kunstharz oder ein Kunstharzgemisch, Fixierungs-, Stabilisierungs-, Verdünnungsmittel und/oder Zusatz- oder Verarbeitungshilfsmittel.

Nach dem erfindungsgemäßen Verfahren wird das organischchemische Biozid oder Biozidgemisch in dem aromatischen, wasserunlöslichen organisch-chemischen Kohlenwasserstofflösemittel oder einem Teil desselben bei einer Temperatur zwischen 5 bis 60 °C, vorzugsweise 10 bis 35 °C, unter intensivem Rühren gelöst und unter Rühren mit den übrigen Bestandteilen, Mischungen der Bestandteile oder dem jeweils einzelnen Bestandteil vermischt, wobei zusätzlich ein Stabilisierungsmittel auf der Basis mindestens eines Aryl- oder Aralkyl- bzw. Alkyl-Aryl-Gruppen tragenden Phenoles, eines Bisphenoles oder Bisphenolderivates und/oder Polyoxypolyphenylalkans verwendet wird und in dem Mittel ein Gemisch von mindestens einem aliphatischen Kohlenwasserstoff und mindestens einem aromatischen Kohlenwasserstoff eingestellt wird, das, bezogen auf 100 Gewichtsteile dieses Lösemittelgemisches, aus 5 bis 20 Gew.-%, vorzugsweise 8 bis 17 Gew.-%, mindestens eines aromatischen Kohlenwasserstofflösemittels und 95 bis 80 Gew.-%, vorzugsweise 92 bis 83 Gew.-%, mindestens eines aliphatischen Kohlenwasserstofflösemittels besteht.

Als Biozide (Insektizide und/oder Fungizide und andere Biozide) werden im Rahmen der Erfindung organisch-chemische, in organisch-chemischen Lösemitteln lösliche Biozide, vorzugsweise wasserunlösliche oder in Wasser schwer lösliche Biozide, eingesetzt.

Bevorzugt werden als Insektizide Pyrethroide, vorzugsweise Cyfluthrin (Cyano-(4-fluoro-3-phenoxyphenylmethyl-3-(2,2-dichlorethenyl)-2,2-dimethylcyclopropancarboxylat), Fenfluthrin (((Pentafluorphenyl)-methyl)-1R,3R-3-(2,2-di-chlorethenyl)-2,2-dimethylcyclopropancarboxylat), Dekamethrin, (1RS)-cis,trans-3-(2,2-Dichlorvinyl)-2,2-dimethylcyclopropancabonsäure-3-phenoxybenzylester (Permethrin) und/oder Mischungen von zwei oder mehreren Pyrethroiden oder Mischungen von mindestens einem Pyrethroid und mindestens einem anderen Insektizid und/oder Insektizide auf der Basis von Organsiliciumverbindungen, vorzugsweise Dimethyl(phenyl)silylmethyl-3-phenoxybenzylether odr Dimethyl (phenyl)-silylmethyl-2-phenoxy-6-pyridylmethylether eingesetzt.

Bevorzugt wird als Dimethyl (phenyl)silylmethyl-3-phenoxybenzylether Dimethyl(4-ethoxyphenyl)silylmethyl-3-phenoxybenzylether der nachstehenden Formel

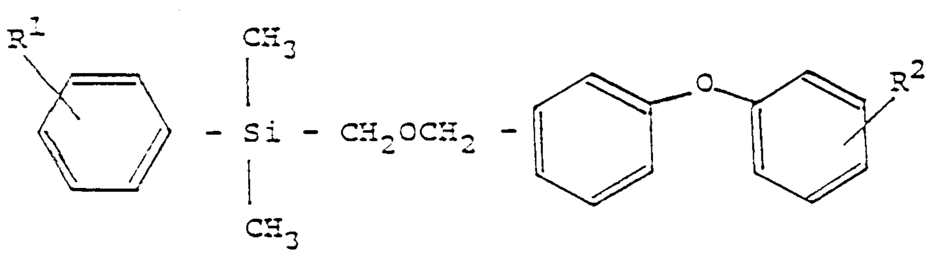

mit $R^1$ = 4-$OC_2H_5$ und $R^2$ = H
und als Dimethyl (phenyl)silylmethyl-2-phenoxy-6-pyridylmethylether Dimethyl(4-ethoxyphenyl)silyl-methyl-2-phenoxy-6-pyridylmethylether der nachstehenden Formel

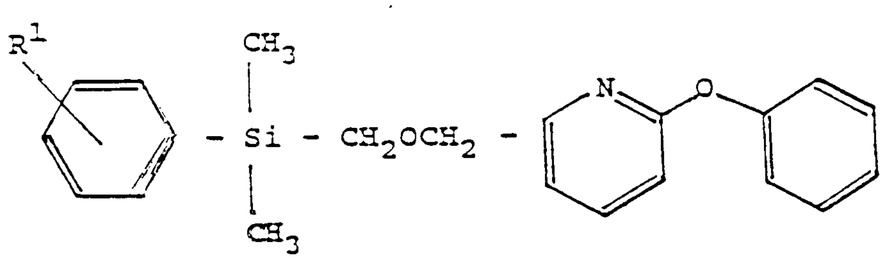

mit $R^1$ = 4-$OC_2H_5$
verwendet.

Weiterhin werden als Insektizide bevorzugt Phosphorsäureester, Thiophosphorsäureester, Dithiophosphorsäureester, vorzugsweise O,O-Diethyl-O-(3,5,6-trichlor-2-pyridyl)-thiophosphat, O,O-Diethyl-O-(α-cyanbenzyliden-amino)-thiophosphat, und/oder O-Ethyl-O-(2,4-dichlorphenyl)-S-n-propyldithiophosphat und/oder mindestens ein Carbamat als Insektizide verwendet.

Als Fungizide werden bevorzugt Azolfungizide, vorzugsweise Propiconazol (1-[[2-(2,4-Dichlorphenyl)-4-propyl-1,3-dioxolan-2-yl]-methyl]-1H-1,2,4-triazol), und/oder Tebuconazol (1-(4-Chlor)-phenyl-3-hydroxy-3-tert-butyl-4-(1,2,4-triazol-1-yl)-butan) und/oder 1-[[2-(2,4-dichlorphenyl)-1,3-dioxolan-2-yl]methyl]-1H-1,2,4-triazol (Azaconazol) und/oder andere Azolfungizide im Mittel verwendet.

Als Fungizide werden weiterhin bevorzugt Jod-propenyl-alkyl-carbamate, Jod-propenyl-aryl-carbamate und/oder Jod-propenyl-cycloalkyl-carbamate und/oder Abkömmlinge, Derivate oder Substitutionsprodukte dieser Verbindungen oder von Propenylalkylcarbamaten eingesetzt. Vorzugsweise werden Jodpropenylbutylcarbamat (insbesondere 3-Jod-2-propenyl-butyl-carbamat) und/oder 3-Jod-2-propenyl-hexyl-carbamat, 3-Jod-2-propenyl-cyclohexyl-carbamat, 3-Jod-2-propenyl-phenyl-carbamat und Mischungen davon verwendet. Weiterhin wird bevorzugt Benzimidazol als Fungizid eingesetzt.

Als weitere Fungizide werden vorzugsweise N-Dichlorfluormethylthio-N',N'-dimethyl-N-phenylschwefelsäurediamid und/oder N-(Dichlorfluormethylthio)-N',N'-dimethyl-N-p-tulylsulfamid und/oder Ethylbenzymethazol-2-yl-carbamat eingesetzt.

Als organisch-chemische Bindemittel werden im Rahmen der vorliegenden Erfindung die an sich bekannten wasserverdünnbaren und/oder in den eingesetzten organisch-chemischen Lösemitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z.B. Polyvinylacetat , Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung eingesetzt werden. Als Bindemittel können auch Bitumen oder bituminöse Substanzen bis zu 10 Gew.-% verwendet werden. Zusätzlich können an sich bekannte Farbstoffe, Pigmente, wasserabweisende Mittel, Geruchskorrigentien und Inhibitoren bzw. Korrosionsschutzmittel und dergleichen eingesetzt werden.

Bevorzugt ist gemäß der Erfindung als organisch-chemisches Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das organisch-chemische Bindemittel oder Bindemittelgemisch kann ganz, vorzugsweise teilweise durch mindestens ein Fixierungsmittel oder mindestens einen Weichmacher ersetzt werden.

Dabei ist das organisch-chemische Bindemittel oder Bindemittelgemisch von 0 bis 75 Gew.-%, vorzugsweise von 0,01 bis zu 35 Gew.-% (bezogen auf 100 Gew.-% eingesetztes Bindemittel, berechnet als Feststoff), durch die gleichen Gewichtsmengen mindestens eines Fixierungsmittels oder mindestens eines Weichmachers ersetzt.

Als Fixierungsmittel oder Weichmacher werden vor allem solche Verbindungen eingesetzt, die neben einer gewissen Bindung oder Haftung an den Wirkstoff zusätzlich eine Verflüchtigung der Wirkstoffe und/oder eine Kristallisation bzw. Ausfällung verhindern sollen, vorzugsweise

a) Weichmacher, z.B. Alkyl-, Aryl- oder Aralkylphthalate, vorzugsweise Dibutyl-, Dioctyl- und Benzylbutylphthalate, Alkylphosphate bzw. Phosphorsäureester , vorzugsweise Tributylphosphat, Adipate, vorzugsweise Di-(2-ethylexyl)-adipat, Stearate und Oleate, z.B. Alkylstearate oder Alkyloleate, vorzugsweise Butyloleat, Butylstearat oder Amylstearat, Bis-(dimethylbenzyl)-äther, p-Toluolsulfonsäureethylester, Glycerinester, Glycerinäther oder höhermolekulare Glykoläther und/oder

b) Fixierungsmittel auf der Basis von Ketonen und/oder Polyvinylalkyläthern, z.B. Ketone mit Alkyl-, Aryl- oder Aralkylgruppen, vorzugsweise Benzophenon, Ethylbenzophenon; Polyvinyläther, vorzugsweise Polyvinylmethyläther.

Das Mittel oder Konzentrat enthält nach einer Ausführungsform einen Emulgator oder ein Emulgatorgemisch, vorzugsweise mindestens ein eine Seitengruppe enthaltendes äthoxyliertes Phenol, vorzugsweise ein äthoxyliertes Nonylphenol und/oder eine äthoxylierte Fettsäure und/oder Fluortensid und/oder ein ionisches Tensid.

Das Konzentrat und das daraus hergestellte Mittel zum Konservieren von Holz und Holzwerkstoffen enthält nach einer anderen Ausführungsform ein Gemisch von Emulgatoren mit unterschiedlicher Kettenlänge, von denen mindestens ein Emulgator eine äthoxylierte Seitenkette von weniger als 10 Äthoxygruppen und von denen mindestens ein anderer Emulgator eine äthoxylierte Seitenkette von mehr als 10 Äthoxygruppen besitzt.

Die Erfindung betrifft weiterhin die Verwendung des Holzkonservierungsmittels gemäß der Erfindung als Grundieranstrichmittel, Imprägnieranstrichmittel oder als Farblasur in einer Auftragsmenge von 30 g/m$^2$ bis 300 g/m$^2$, vorzugsweise 60 g/m$^2$ bis 180 g/m$^2$ Holzoberfläche oder Oberfläche von Holzwerkstoffen.

## Beispiele

### Beispiel 1

| Holzkonservierungsmittel mit grundierender Wirkung | |
|---|---|
| 1-[[2-(2,4-Dichlorphenyl)-4-propyl-1,3-dioxolan-2-yl]-methyl]-1H-1,2,4-triazol (Propiconazol) | 1,5 Gew.-% |
| Cyano-(4-fluoro-3-phenoxyphenylmethyl-3-(2-,2-dichloro-ethenyl)-2,2-dimethylcyclopropancarboxylat (Cyfluthrin) | 0,01 Gew.-% |
| Alkydharz (100 %ig) | 9,0 Gew.-% |
| Butyldiglykol | 1,2 Gew.-% |
| Sikkative | 0,2 Gew.-% |
| Lösungsmittel: | |
| aromatische Kohlenwasserstoffe | 6,03 Gew.-% |
| Gemisch aus aromatischen und aliphatischen Kohlenwasserstofflösemitteln | 80,14 Gew.-% |
| anorganische Pigmente | 1,8 Gew.-% |
| 2,2-Bis-(4-hydroxyphenyl)-propan (als Stabilisierungsmittel) | 0,02 Gew.-% |
| Phosphatid (Soja-Lecithin) (als Stabilisierungsmittel) | 0,1 Gew.-% |

### Beispiel 2

| Lasurartiges Holzkonservierungsmittel (farblos) | |
|---|---|
| 1-[[2-(2,4-Dichlorphenyl)-4-propyl-1,3-dioxolan-2-yl]-methyl]-1H-1,2,4-triazol (Propiconazol) | 1,5 Gew.-% |
| Cyano-(4-fluoro-3-phenoxyphenylmethyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz (100 %ig) | 18,0 Gew.-% |
| Sikkative, Netzmittel, Antiabsetzmittel | 1,0 Gew.-% |
| Butyldiglykol | 3,9 Gew.-% |
| Lösungsmittel: | |
| Gemisch aus aromatischen und aliphatischen Kohlenwasserstoffen, davon 7,5 Gew.-% aromatische Kohlenwasserstoffe und 67,4 Gew.-% aliphatische Kohlenwasserstoffe | 74,9 Gew.-% |
| 2,2-Bis-(4-hydroxyphenyl)-propan (als Stabilisierungsmittel) | 0,1 Gew.-% |
| 3,5-Di-tert-butyl-4-hydroxytoluol | 0,04 Gew.-% |

Beispiel 3

| Holzkonservierungsmittel mit grundierender Wirkung | |
|---|---|
| 1-(4-Chlor)-phenyl-3-hydroxy-3-tert-butyl-4-(1,2,4-triazol-1-yl)-butan (Tebuconazol) | 1,5 Gew.-% |
| Cyano-(4-fluoro-3-phenoxyphenylmethyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz (100 %ig) | 7,0 Gew.-% |
| Sikkative | 0,2 Gew.-% |
| Butyldiglykol | 3,0 Gew.-% |
| Lösungsmittel: | |
| Gemisch aus aromatischen und aliphatischen Kohlenwasserstoffen, davon 8,8 Gew.-% aromatische Kohlenwasserstoffe und 78,8 Gew.-% aliphatische Kohlenwasserstoffe | 87,6 Gew.-% |
| 2,2-Bis-(4-hydroxyphenyl)-propan (als Stabilisierungsmittel) | 0,04 Gew.-% |
| Phosphatid (Soja-Lecithin) (als Stabilisierungsmittel) | 0,1 Gew.-% |

Beispiel 4

| Holzkonservierungsmittel mit vorbeugender Wirkung für den Holzbau (farblos) | |
|---|---|
| 1-(4-Chlor)-phenyl-3-hydroxy-3-tert-butyl-4-(1,2,4-triazol-1-yl)-butan (Tebuconazol) | 1,5 Gew.-% |
| Cyano-(4-fluoro-3-phenoxyphenylmethyl-3-(2,2-dichloro-ethenyl)-2,2-dimethylcyclopropancarboxylat (Cyfluthrin) | 0,05 Gew.-% |
| Butyldiglykol | 3,0 Gew.-% |
| Methoxypropylacetat | 1,5 Gew.-% |
| Lösungsmittel: | |
| Gemisch aus aromatischen und aliphatischen Kohlenwasserstoffen, davon 9,0 Gew.-% aromatische Kohlenwasserstoffe und 84,8 Gew.-% aliphatische Kohlenwasserstoffe | 93,8 Gew.-% |
| 2,2-Bis-(4-hydroxyphenyl)-propan (als Stabilisierungsmittel) | 0,04 Gew.-% |
| Phosphatid (Soja-Lecithin) (als Stabilisierungsmittel) | 0,1 Gew.-% |
| 3,5-Di-tert-butyl-4-hydroxytoluol | 0,01 Gew.-% |

Beispiel 5

| Holzkonservierungsmittel mit vorbeugender Wirkung für den Holzbau (farbig) | |
|---|---|
| 1-(4-Chlor)-phenyl-3-hydroxy-3-tert-butyl-4-(1,2,4-triazol-1-yl)-butan (Tebuconazol) | 1,5 Gew.-% |
| Cyano-(4-fluoro-3-phenoxyphenylmethyl-3-(2,2-dichloro-ethenyl)-2,2-dimethylcyclopropancarboxylat (Cyfluthrin) | 0,05 Gew.-% |
| Butyldiglykol | 3,0 Gew.-% |
| Methoxypropylacetat | 1,5 Gew.-% |
| Farbstoff (Fettbraun B) | 0,6 Gew.-% |
| Lösungsmittel: | |
| Gemisch aus aromatischen und aliphatischen Kohlenwasserstoffen, davon 11,2 Gew.-% aromatische Kohlenwasserstoffe und 82,0 Gew.-% aliphatische Kohlenwasserstoffe | 93,2 Gew.-% |
| 2,2-Bis-(4-hydroxyphenyl)-propan (als Stabilisierungsmittel) | 0,04 Gew.-% |
| Phosphatid (Soja-Lecithin) (als Stabilisierungsmittel) | 0,1 Gew.-% |
| 3,5-Di-tert-butyl-4-hydroxytoluol | 0,01 Gew.-% |

Beispiel 6

Holzkonservierungsmittel

| | | |
|---|---|---|
| 1-(4-Chlor)-phenyl-3-hydroxy-3-tert-butyl-4-(1,2,4-triazol-1-yl)-butan (Tebuconazol) | 0,5 | Gew.-% |
| 1-[[2-(2,4-Dichlorphenyl)-4-propyl-1,3-dioxolan-2-yl]-methyl]-1H-1,2,4-triazol (Propiconazol) | 0,88 | Gew.-% |
| Cyano-(4-fluoro-3-phenoxyphenylmethyl-3-(2,2-dichloro-ethenyl)-2,2-dimethylcyclopropancarboxylat (Cyfluthrin) | 0,01 | Gew.-% |
| Permethrin | 0,01 | Gew.-% |
| polares Lösungsmittel | 0,15 | Gew.-% |
| anorganische Pigmente | 1,8 | Gew.-% |
| Alkydharz (berechnet als Feststoff) | 20,0 | Gew.-% |
| Lösungsmittel: | | |
| Gemisch aus aromatischen und aliphatischen Kohlenwasserstoffen, davon 5,0 Gew.-% aromatische Kohlenwasserstoffe und 71,53 Gew.-% aliphatische Kohlenwasserstoffe | 76,53 | Gew.-% |
| 2,2-Bis-(4-hydroxyphenyl)-propan (als Stabilisierungsmittel) | 0,019 | Gew.-% |

| | |
|---|---|
| Phosphatid (Soja-Lecithin) (als Stabilisierungsmittel) | 0,1 Gew.-% |
| 3,5-Di-tert-butyl-4-hydroxytoluol | 0,001 Gew.-% |

Beispiel 7

| Holzkonservierungsmittel mit grundierender Wirkung | |
|---|---|
| 1-[[2-(2,4-Dichlorphenyl)-4-propyl-1,3-dioxolan-2-yl]-methyl]-1H-1,2,4-triazol (Propiconazol) | 1,5 Gew.-% |
| Cyano-(4-fluoro-3-phenoxyphenylmethyl-3-(2, 2-dichloro-ethenyl)-2,2-dimethylcyclopropancarboxylat (Cyfluthrin) | 0,01 Gew.-% |
| Alkydharz (100 %ig) | 9,0 Gew.-% |
| Butyldiglykol | 1,2 Gew.-% |
| Sikkative | 0,2 Gew.-% |
| Lösungsmittel: | |
| aromatische Kohlenwasserstoffe | 6,03 Gew.-% |
| Gemisch aus aromatischen und aliphatischen Kohlenwasserstofflösemitteln | 80,14 Gew.-% |
| anorganische Pigmente | 1,8 Gew.-% |
| Phosphatid (Soja-Lecithin) (als Stabilisierungsmittel) | 0,12 Gew.-% |

Beispiel 8

| Holzkonservierungsmittel mit grundierender Wirkung | |
|---|---|
| 1-(4-Chlor)-phenyl-3-hydroxy-3-tert-butyl-4-(1,2,4-triazol-1-yl)-butan (Tebuconazol) | 1,5 Gew.-% |
| Cyano-(4-fluoro-3-phenoxyphenylmethyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz (100 %ig) | 7,0 Gew.-% |
| Sikkative | 0,2 Gew.-% |
| Butyldiglykol | 3,0 Gew.-% |
| Lösungsmittel: | |
| Gemisch aus aromatischen und aliphatischen Kohlenwasserstoffen, davon 8,8 Gew.-% aromatische Kohlenwasserstoffe und 78,8 Gew.-% aliphatische Kohlenwasserstoffe | 87,66 Gew.-% |
| 2,2-Bis-(4-hydroxyphenyl)-propan (als Stabilisierungsmittel) | 0,08 Gew.-% |

**Patentansprüche**

1. Mittel zum Konservieren von Holz und Holzwerkstoffen enthaltend mindestens ein wasserunlösliches, in einem flüssigen aliphatischen und/oder aromatischen Kohlenwasserstofflösemittel lösliches Biozid und ein flüssiges Lösemittelgemisch aus aliphatischen und aromatischen Kohlenwasserstoffen sowie gegebenenfalls Farbstoffe und/oder Pigmente, ein Kunstharz oder ein Kunstharzgemisch, Fixierungs-, Stabilisierungs-, Verdünnungsmittel und/oder Zusatz- oder Verarbeitungshilfsmittel, dadurch gekennzeichnet, daß das mindestens einen aliphatischen Kohlenwasserstoff und mindestens einen aromatischen Kohlenwasserstoff enthaltende wasserunlösliche Lösemittelgemisch (bezogen auf 100 Gewichtsteile des Gemisches aus aliphatischen und aromatischen Kohlenwasserstoffen) aus 5 bis 20 Gew.-%, vorzugsweise 6 bis 17 Gew.-%, mindestens eines aromatischen Kohlenwasserstofflösemittels und 95 bis 80 Gew.-%, vorzugsweise 94 bis 83 Gew.-%, mindestens eines aliphatischen Lösemittels, vorzugsweise eines aliphatischen Kohlenwasserstoffes, besteht und daß das Holzkonservierungsmittel zusätzlich ein Stabilisierungsmittel auf der Basis mindestens eines Aryl- oder Aralkyl- bzw. Alkyl-Aryl-Gruppen tragenden Phenoles, eines Bisphenoles oder Bisphenolderivates und/oder Polyoxypolyphenylalkans und/oder mindestens eines Phosphatides enthält.

**2.** Holzkonservierungsmittel nach Anspruch 1, dadurch gekennzeichnet, daß das Stabilisierungsmittel ein Bis-hydroxyarylalkan oder Bis-hydroxyarylalkanderivat, vorzugsweise Bis-hydroxyphenyl-alkan mit $C_1$ bis $C_5$, enthält oder daraus besteht.

**3.** Holzkonservierungsmittel nach Ansprüchen 1 und 2, dadurch gekennzeichnet, daß je 100 Gewichtsteile Kohlenwasserstofflösemittelgemisch 0,005 bis 15 Gew.-%, vorzugsweise 0,01 bis 2 Gew.-%, Stabilisierungsmittel oder Stabilisierungsmittelgemische im Holzkonservierungsmittel enthalten sind.

**4.** Holzkonservierungsmittel nach einem oder mehreren der Ansprüche 1 bis 3, dadurch gekennzeichnet, daß das Holzkonservierungsmittel je 100 Gewichtsteile Kohlenwasserstofflösemittelgemische zusätzlich 0,005 bis 25 Gewichtsteile, vorzugsweise 0,05 bis 5 Gewichtsteile, mindestens eines polaren, organischchemischen wasserlöslichen Lösemittels oder Lösemittelgemisches, vorzugsweise eines aliphatischen Alkohols, Esters und/oder Ethers, enthält.

**5.** Holzkonservierungsmittel nach einem oder mehreren der Ansprüche 1 bis 4, dadurch gekennzeichnet, daß das Stabilisierungsmittel Bis-(4-hydroxyphenyl)-methan, Bis-(4-hydroxyphenyl)-propan, Bis-(3-methyl-4-hydroxyphenyl)-propan, Bis-(4-hydroxy-3,5-di-tert-butylphenyl)-methan, vorzugsweise 2,2-Bis-(4-hydroxyphenyl)-propan, enthält oder daraus besteht.

**6.** Holzkonservierungsmittel nach einem oder mehreren der Ansprüche 1 bis 5, dadurch gekennzeichnet, daß das Stabilisierungsmittel zusätzlich mindestens ein Hydroxytoluol, Alkyl- oder Polyalkyl-hydroxytoluol, vorzugsweise Di-alkyl-hydroxytoluol enthält.

**7.** Holzkonservierungsmittel nach einem oder mehreren der Ansprüche 1 bis 6, dadurch gekennzeichnet, daß das Phosphatid aus Soja-Lecithin besteht oder dieses enthält.

**8.** Holzkonservierungsmittel nach einem oder mehreren der Ansprüche 1 bis 7, dadurch gekennzeichnet, daß das Di-alkyl-hydroxytoluol ein $C_1$- bis $C_5$-Alkyl besitzt, vorzugsweise jedoch aus 3,5-Di-tert-butyl-4-hydroxytoluol besteht.

**9.** Holzkonservierungsmittel nach einem oder mehreren der Ansprüche 1 bis 8, dadurch gekennzeichnet, daß das Gewichtsverhältnis des Phenolderivates oder Bisphenoles oder Bisphenolderivates und/oder Polyoxypolyphenylalkans zu dem Phosphatid
5 : 1 bis 1 : 50, vorzugsweise
1 : 1 bis 1 : 10, beträgt.

**10.** Holzkonservierungsmittel nach einem oder mehreren der Ansprüche 1 bis 9, dadurch gekennzeichnet, daß das Holzkonservierungsmittel
0,1 bis 35 Gew.-%, vorzugsweise
2 bis 25 Gew.-%,
mindestens eines organisch-chemischen Bindemittels oder Kunstharzes, vorzugsweise eines Alkydharzes (berechnet als Feststoff), und/oder Fixierungsmittels (berechnet ohne Verdünnungs- oder Lösemittel) enthält.

**11.** Holzkonservierungsmittel nach einem oder mehreren der Ansprüche 1 bis 10, dadurch gekennzeichnet, daß das Holzkonservierungsmittel
0,001 bis 30 Gew.-%
mindestens eines in einem organisch-chemischen Lösemittelgemisch löslichen Biozides,

mehr als 50 Gew.-%, vorzugsweise
mehr als 60 Gew.-%,
eines Lösemittelgemisches, das aus mindestens einem aliphatischen und mindestens einem aromatischen Kohlenwasserstoff-Lösemittel und dem Stabilisierungsmittel oder Stabilisierungsmittelgemisch besteht oder dieses enthält, und je 100 Gewichtsteile des Kohlenwasserstoff-Lösemittelgemisches 0,005 bis 15 Gewichtsteile, vorzugsweise 0,01 bis 3 Gewichtsteile, des Stabilisierungsmittels oder Stabilisierungsmittelgemisches sowie 0,005 bis 25 Gewichtsteile, vorzugsweise 0,05 bis 5 Gewichtsteile, mindestens eines polaren Lösungsmittels enthält
sowie mindestens ein organisch-chemisches Bindemittel oder Fixierungsmittel, vorzugsweise Alkydharz, sowie gegebenenfalls mindestens ein Verarbeitungshilfsmittel, Tensid, Pigment und/oder Farbstoff enthält.

**12.** Holzkonservierungsmittel nach einem oder mehreren der Ansprüche 1 bis 11, dadurch gekennzeichnet, daß das Mittel (anwendungsfertiges Holzkonservierungsmittel)
0,001 bis 8 Gew.-%, vorzugsweise
0,01 bis 4 Gew.-%,
mindestens eines organisch-chemischen Biozides,
0,1 bis 30 Gew.-%, vorzugsweise
5 bis 25 Gew.-% (berechnet als Feststoff),
mindestens eines Binde- und/oder Fixierungsmittels, vorzugsweise Alkydharz,
0 bis 5 Gew.-%, vorzugsweise
0,01 bis 3 Gew.-%,
mindestens eines Farbstoffes, Pigmentes, Siccatives, Antiabsetzmittels, Tensides und/oder eines anderen Zusatzmittels sowie
91,899 Gew.-% bis 58 Gew.-%, vorzugsweise
94,89 Gew.-% bis 68 Gew.-%,
eines Gemisches aus mindestens einen aliphatischen und mindestens einen aromatischen Kohlenwasserstoff enthaltendem Lösemittelgemisch mit einem Stabilisierungsmittel oder Stabilisierungsmittelgemisch sowie gegebenenfalls mindestens ein polares organisch-chemisches Lösemittel enthält oder daraus besteht.

**13.** Verfahren zur Herstellung eines Mittels zum Konservieren von Holz und Holzwerkstoffen enthaltend mindestens ein wasserunlösliches, in einem flüssigen aliphatischen und/oder aromatischen Kohlenwasserstofflösemittel lösliches organisch-chemisches Biozid und ein flüssiges Lösemittelgemisch aus aliphatischen und aromatischen Kohlenwasserstoffen sowie gegebenenfalls Farbstoffe und/oder Pigmente, ein Kunstharz oder ein Kunstharzgemisch, Fixierungs-, Stabilisierungs-, Verdünnungsmittel und/oder Zusatz- oder Verarbeitungshilfsmittel, dadurch gekennzeichnet, daß das organisch-chemische Biozid oder Biozidgemisch in dem aromatischen, wasserunlöslichen organisch-chemischen Kohlenwasserstofflösemittel oder einem Teil desselben bei einer Temperatur zwischen 5 bis 60 °C, vorzugsweise 10 bis 35 °C, unter intensivem Rühren gelöst und unter Rühren mit den übrigen Bestandteilen, Mischungen der Bestandteile oder dem jeweils einzelnen Bestandteil vermischt wird, wobei zusätzlich ein Stabilisierungsmittel auf der Basis mindestens eines Aryl- oder Aralkyl- bzw. Alkyl-Aryl-Gruppen tragenden Phenoles, eines Bisphenoles oder Bisphenolderivates und/oder Polyoxypolyphenylalkans und/oder eines Phosphatides verwendet wird und in dem Mittel ein Gemisch von mindestens einem aliphatischen Kohlenwasserstoff und mindestens einem aromatischen Kohlenwasserstoff eingesetzt wird, das, bezogen auf 100 Gewichtsteile dieses Lösemittelgemisches, aus 5 bis 20 Gew.-%, vorzugsweise 8 bis 17 Gew.-%, mindestens eines aromatischen Kohlenwasserstofflösemittels und 95 bis 80 Gew.-%, vorzugsweise 92 bis 83 Gew.-%, mindestens eines aliphatischen Kohlenwasserstofflösemittels enthält.

**14.** Verwendung des Holzkonservierungsmittels nach einem oder mehreren der Ansprüche 1 bis 12 als Grundieranstrichmittel, Imprägnieranstrichmittel oder als Farblasur in einer Auftragsmenge von 30 $g/m^2$ bis 300 $g/m^2$, vorzugsweise 60 $g/m^2$ bis 180 $g/m^2$ Holzoberfläche.

## Claims

**1.** An agent for preserving wood and timber materials, containing at least one water-insoluble biocide which is soluble in a liquid aliphatic and/or aromatic hydrocarbon solvent and a liquid solvent mixture

consisting of aliphatic and aromatic hydrocarbons and also optionally dyes and/or pigments, a synthetic resin or a synthetic resin mixture, fixing agent, stabilising agent, diluent and/or additive or processing aid, characterised in that the water-insoluble solvent mixture which contains at least one aliphatic hydrocarbon and at least one aromatic hydrocarbon (relative to 100 parts by weight of the mixture of aliphatic and aromatic hydrocarbons) consists of 5 to 20% by weight, preferably 6 to 17% by weight, of at least one aromatic hydrocarbon solvent and 95 to 80% by weight, preferably 94 to 83% by weight, of at least one aliphatic solvent, preferably an aliphatic hydrocarbon, and that the wood preservation agent additionally contains a stabilising agent on the basis of at least one phenol bearing aryl or aralkyl or alkyl-aryl groups, a biphenol or biphenol derivative and/or polyoxypolyphenyl alkane and/or at least one phosphatide.

**2.** A wood preservation agent according to Claim 1, characterised in that the stabilising agent contains or consists of a bis-hydroxyaryl alkane or bis-hydroxyaryl alkane derivative, preferably bis-hydroxyphenyl-alkane with $C_1$ to $C_5$.

**3.** A wood preservation agent according to Claims 1 and 2, characterised in that 0.005 to 15% by weight, preferably 0.01 to 2% by weight, stabilising agent or stabilising agent mixtures per 100 parts by weight hydrocarbon solvent mixture are contained in the wood preservation agent.

**4.** A wood preservation agent according to one or more of Claims 1 to 3, characterised in that the wood preservation agent additionally contains 0.005 to 25 parts by weight, preferably 0.05 to 5 parts by weight, of at least one polar, organic-chemical water-soluble solvent or solvent mixture, preferably an aliphatic alcohol, ester and/or ether, per 100 parts by weight hydrocarbon solvent mixtures.

**5.** A wood preservation agent according to one or more of Claims 1 to 4, characterised in that the stabilising agent contains or consists of bis-(4-hydroxyphenyl)-methane, bis-(4-hydroxyphenyl)-propane, bis-(3-methyl-4-hydroxyphenyl)-propane, bis-(4-hydroxy-3,5-di-tert.-butylphenyl)-methane, preferably 2,2-bis-(4-hydroxy-phenyl)-propane.

**6.** A wood preservation agent according to one or more of Claims 1 to 5, characterised in that the stabilising agent additionally contains at least one hydroxytoluene, alkyl- or polyalkyl-hydroxytoluene, preferably di-alkyl-hydroxytoluene.

**7.** A wood preservation agent according to one or more of Claims 1 to 6, characterised in that the phosphatide consists of or contains soya-lecithin.

**8.** A wood preservation agent according to one or more of Claims 1 to 7, characterised in that the di-alkylhydroxytoluene has a $C_1$- to $C_5$-alkyl, but preferably consists of 3,5-di-tert.-butyl-4-hydroxytoluene.

**9.** A wood preservation agent according to one or more of Claims 1 to 8, characterised in that the weight ratio of the phenol derivative or biphenol or biphenol derivative and/or polyoxypolyphenyl alkane to the phosphatide is
5 : 1 to 1 : 50, preferably
1 : 1 to 1 : 10.

**10.** A wood preservation agent according to one or more of Claims 1 to 9, characterised in that the wood preservation agent contains
0.1 to 35% by weight, preferably
2 to 25% by weight,
of at least one organic-chemical binder or synthetic resin, preferably an alkyd resin (calculated as solids), and/or fixing agent (calculated without diluent or solvent).

**11.** A wood preservation agent according to one or more of Claims 1 to 10, characterised in that the wood preservation agent contains
0.001 to 30% by weight
of at least one biocide which is soluble in an organic-chemical solvent mixture,
more than 50% by weight, preferably
more than 60% by weight,

of a solvent mixture which consists of or contains at least one aliphatic and at least one aromatic hydrocarbon solvent and the stabilising agent or stabilising agent mixture, and, per 100 parts by weight of the hydrocarbon solvent mixture, contains 0.005 to 15 parts by weight, preferably 0.01 to 3 parts by weight, of the stabilising agent or stabilising agent mixture and 0.005 to 25 parts by weight, preferably 0.05 to 5 parts by weight, of at least one polar solvent
and at least one organic-chemical binder or fixing agent, preferably alkyd resin, and also optionally at least one processing aid, surfactant, pigment and/or dye.

**12.** A wood preservation agent according to one or more of Claims 1 to 11, characterised in that the agent (wood preservation agent ready for use) contains or consists of
0.001 to 8% by weight, preferably
0.01 to 4% by weight,
of at least one organic-chemical biocide,
0.1 to 30% by weight, preferably
5 to 25% by weight (calculated as solids),
of at least one binder and/or fixing agent, preferably alkyd resin,
0 to 5% by weight, preferably
0.01 to 3% by weight,
of at least one dye, pigment, siccative, anti-settling agent, surfactant and/or another additive and
91.899% by weight to 58% by weight, preferably
94.89% by weight to 68% by weight,
of a mixture consisting of a solvent mixture containing at least one aliphatic and at least one aromatic hydrocarbon with a stabilising agent or stabilising agent mixture and also optionally at least one polar organic-chemical solvent.

**13.** A method for preparing an agent for preserving wood and timber materials containing at least one water-insoluble, organic-chemical biocide which is soluble in a liquid aliphatic and/or aromatic hydrocarbon solvent and a liquid solvent mixture consisting of aliphatic and aromatic hydrocarbons and also optionally dyes and/or pigments, a synthetic resin or a synthetic resin mixture, fixing agent, stabilising agent, diluent and/or additive or processing aid, characterised in that the organic-chemical biocide or biocide mixture is dissolved in the aromatic, water-insoluble organic-chemical hydrocarbon solvent or part thereof at a temperature of between 5 and 60 °C, preferably 10 to 35 °C, with intensive stirring, and is mixed, with stirring, with the remaining constituents, mixtures of the constituents or the individual constituent in each case, with a stabilising agent on the basis of at least one phenol bearing aryl or aralkyl or alkyl-aryl groups, a biphenol or biphenol derivative and/or polyoxypolyphenyl alkane and/or of a phosphatide additionally being used, and a mixture of at least one aliphatic hydrocarbon and at least one aromatic hydrocarbon being used in the agent, which, relative to 100 parts by weight of this solvent mixture, contains 5 to 20% by weight, preferably 8 to 17% by weight, of at least one aromatic hydrocarbon solvent and 95 to 80% by weight, preferably 92 to 83% by weight, of at least one aliphatic hydrocarbon solvent.

**14.** The use of the wood preservation agent according to one or more of Claims 1 to 12 as a primer coating, impregnation coating or as a coloured glaze in an application quantity of 30 $g/m^2$ to 300 $g/m^2$, preferably 60 $g/m^2$ to 180 $g/m^2$, wood surface.

**Revendications**

**1.** Agent pour la conservation du bois et de matériaux en bois contenant au moins un biocide insoluble dans l'eau, soluble dans un solvant hydrocarboné aliphatique et/ou aromatique liquide, et un mélange de solvants liquide composé d'hydrocarbures aliphatiques et aromatiques, ainsi qu'éventuellement des colorants et/ou des pigments, une résine synthétique ou un mélange de résines synthétiques des fixateurs, des stabilisants, des diluants et/ou des adjuvants ou des auxiliaires de transformation, caractérisé en ce que le mélange de solvants insoluble dans l'eau contenant au moins un hydrocarbure aliphatique et au moins un hydrocarbure aromatique (par rapport à 100 parties en poids du mélange d'hydrocarbures aliphatiques et aromatiques) est constitué de 5 à 20% en poids, de préférence de 6 à 17% en poids d'au moins un solvant hydrocarboné aromatique et de 95 à 80% en poids, de préférence de 94 à 83% en poids d'au moins un solvant aliphatique, de préférence un hydrocarbure aliphatique, et que l'agent de conservation du bois contient en outre un stabilisant à base d'au moins un phénol

porteur de groupes aryles ou aralkyles, ou alkylaryles, d'un bisphénol ou d'un dérivé de bisphénol et/ou d'un polyoxypolyphénylalcane et/ou d'au moins un phosphatide.

**2.** Agent de conservation du bois selon la revendication 1, caractérisé en ce que le stabilisant contient ou est constitué par un bis-hydroxyarylalcane ou un dérivé de bis-hydroxyarylalcane, de préférence par un bis-hydroxyphénylalcane en $C_1$ à $C_5$.

**3.** Agent de conservation du bois selon les revendications 1 et 2, caractérisé en ce que l'agent de conservation du bois comporte, pour 100 parties en poids de mélange de solvants hydrocarbonés, 0,005 à 15% en poids, de préférence 0,01 à 2% en poids de stabilisant ou mélange de stabilisants.

**4.** Agent de conservation du bois selon une ou plusieurs des revendications 1 à 3, caractérisé en ce que l'agent de conservation du bois contient en outre, pour 100 parties en poids de mélange de solvants hydrocarbonés, 0,005 à 25 parties en poids, de préférence 0,05 à 5 parties en poids d'au moins un solvant ou mélange de solvants chimiques organiques polaires soluble dans l'eau, de préférence un alcool, un ester et/ou un éther aliphatique.

**5.** Agent de conservation du bois selon une ou plusieurs des revendications 1 à 4, caractérisé en ce que le stabilisant contient ou est constitué par du bis-(4-hydroxyphényl)méthane, du bis-(4-hydroxyphényl)-propane, du bis-(3-méthyl-4-hydroxyphényl)propane, du bis-(4-hydroxy-3,5-di-tertiobutylphényl)-méthane, de préférence par du 2,2-bis-(4-hydroxyphényl)propane.

**6.** Agent de conservation du bois selon une ou plusieurs des revendications 1 à 5, caractérisé en ce que le stabilisant contient en outre au moins un hydroxytoluène, un alkyl- ou polyalkylhydroxytoluène, de préférence un dialkylhydroxytoluène.

**7.** Agent de conservation du bois selon une ou plusieurs des revendications 1 à 6, caractérisé en ce que le phosphatide consiste en ou contient de la lécithine de soja.

**8.** Agent de conservation du bois selon une ou plusieurs des revendications 1 à 7, caractérisé en ce que le dialkylhydroxytoluène possède un akyle en $C_1$ à $C_5$, mais consiste de préférence en 3,5-di-tert.butyl-4-hydroxytoluène.

**9.** Agent de conservation du bois selon une ou plusieurs des revendications 1 à 8, caractérisé en ce que le rapport pondéral du dérivé phénolïque, du bisphénol, du dérivé de bisphénol et/ou du polyoxypolyphénylalcane au phosphatide s'étend
de 5:1 à 1:50, de préférence
de 1:1 à 1:10.

**10.** Agent de conservation du bois selon une ou plusieurs des revendications 1 à 9, caractérisé en ce que l'agent de conservation du bois contient
0,1 à 35% en poids, de préférence
2 à 25% en poids
d'au moins un liant ou résine synthétique chimique organique, de préférence d'une résine alkyde (calculés en extrait sec) et/ou d'au moins un fixateur (calculés sans diluant ou solvant).

**11.** Agent de conservation du bois selon une ou plusieurs des revendications 1 à 10, caractérisé en ce que l'agent de conservation du bois contient 0,001 à 30% en poids d'au moins un biocide soluble dans un mélange de solvants chimiques organiques,
plus de 50% en poids, de préférence
plus de 60% en poids
d'un mélange de solvants consistant en ou contenant au moins un solvant hydrocarboné aliphatique et au moins un solvant hydrocarboné aromatique et le stabilisant ou mélange de stabilisants et, pour 100 parties en poids du mélange de solvants hydrocarbonés, 0,005 à 15 parties en poids, de préférence 0,01 à 3 parties en poids du stabilisant ou mélange de stabilisants ainsi que 0,005 à 25 parties en poids, de préférence 0,05 à 5 parties en poids d'au moins un solvant polaire, ainsi qu'au moins un liant ou un fixateur chimique organique, de préférence une résine alkyde, ainsi qu'éventuellement au moins un auxiliaire de transformation, un agent de surface, un pigment et/ou un colorant.

**12.** Agent de conservation du bois selon une ou plusieurs des revendications 1 à 11, caractérisé en ce que l'agent (agent de conservation du bois prêt à l'emploi) contient ou est constitué par

0,001 à 8% en poids, de préférence
0,01 à 4% en poids
d'au moins un biocide chimique organique,
0,1 à 30% en poids, de préférence
5 à 25% en poids (calculés en extrait sec) d'au moins

un liant et/ou un fixateur, de préférence une résine alkyde,

0 à 5% en poids, de préférence
0,01 à 3% en poids
d'au moins un colorant, un pigment, un siccatif, un agent antisédimentation, un agent de surface

et/ou un autre adjuvant, ainsi que

91,899% en poids à 58% en poids, de préférence
94,89% en poids à 68% en poids
d'un mélange constitué à partir d'un mélange de solvants contenant au moins un hydrocarbure

aliphatique et au moins un hydrocarbure aromatique avec un stabilisant ou un mélange de stabilisants, ainsi qu'éventuellement au moins un solvant organique chimique polaire.

**13.** Procédé de préparation d'un agent pour la conservation du bois et de matériaux en bois contenant au moins un biocide chimique organique insoluble dans l'eau, soluble dans un solvant hydrocarboné aliphatique et/ou aromatique liquide et un mélange de solvants liquide composé d'hydrocarbures aliphatiques et aromatiques, ainsi qu'éventuellement des colorants et/ou des pigments, une résine synthétique ou un mélange de résines synthétiques, des fixateurs, des stabilisants, des diluants et/ou des adjuvants ou des auxiliaires de transformation, caractérisé en ce que le biocide ou mélange de biocides chimiques organiques est dissous sous agitation intense à une température entre 5 et 60 °C, de préférence entre 10 et 35 °C, dans le solvant hydrocarboné aromatique insoluble dans l'eau ou dans une partie de celui-ci et est mélangé sous agitation avec les autres composants, mélanges de composants ou éventuellement avec le composant individuel, moyennant quoi on utilise en outre un stabilisant à base d'au moins un phénol porteur de groupes aryles ou aralkyles, ou alkylaryles, d'un bisphénol ou d'un dérivé de bisphénol et/ou d'un polyoxypolyphénylalcane et/ou d'un phosphatide et on met en oeuvre dans l'agent un mélange d'au moins un hydrocarbure aliphatique et d'au moins un hydrocarbure aromatique qui contient, par rapport à 100 parties en poids de ce mélange de solvants, 5 à 20% en poids, de préférence 8 à 17% en poids d'au moins un solvant hydrocarboné aromatique et 95 à 80% en poids, de préférence 92 à 83% en poids d'au moins un solvant hydrocarboné aliphatique.

**14.** Utilisation de l'agent de conservation du bois selon une ou plusieurs des revendications 1 à 12 comme peinture pour couches de fond, peinture d'imprégnation ou comme vernis teinté en une quantité déposée de 30 $g/m^2$ à 300 $g/m^2$, de préférence de 60 $g/m^2$ à 180 $g/m^2$ de surface de bois.